# EUROPEAN PATENT SPECIFICATION

(11) **EP 2 023 466 B1**
(45) Date of publication and mention of the grant of the patent: **12.01.2011**
(21) Application number: 07425526.6
(22) Date of filing: 10.08.2007
(51) Int. Cl.: H02K 5/22, H02G 3/08

(54) **Electric motor with plastic casing provided with anchoring means with a tight seal for the power cable**
Elektromotor mit Kunststoffgehäuse mit Verankerungsvorrichtung mit fester Abdichtung für das Stromkabel
Moteur électrique doté d'un boîtier plastique doté d'un moyen d'ancrage avec un joint étanche pour le câble électrique

(43) Date of publication of application: 11.02.2009
(73) Proprietor: ELCO S.p.A., 24100 Bergamo (IT)
(72) Inventor: Colombo, Enzo, 24049 Verdello - Bergamo (IT)
(74) Representative: Petruzziello, Aldo

(56) References cited:
- DE-A1- 10 113 559
- DE-A1- 10 234 027
- JP-A- 11 203 972
- US-A- 5 777 409
- US-A1- 2003 000 726
- US-A1- 2003 102 143
- US-A1- 2003 136 780

## Description

The present invention relates to an electric motor with a plastic casing provided with anchoring means for the power cable adapted to ensure an IP66 seal.

The casings of electric motors are conventionally made of metal material, in particular aluminium, in order to ensure a good closure between the body and the cover, and thus a good seal on the power cable, thanks to the non-deformability of the material.

The electric power cable, with relative cable gland, is housed in a special hole made in the casing and constrained thereto by screwing of a ring nut.

The drawbacks of such prior art arrangements are obvious, ranging from the high costs of the metal raw material, to the working costs thereof, as well as the complexity of assembly, also because the electric power cable is fixed by means of a ring nut.

Attempts have therefore been made to make at least one of the elements of the casing, body or cover, from plastic material.

However, because of the deformability of plastic, it has not been possible to obtain good fixing of the power cable and to ensure an acceptable degree of sealing, compatible with the use for which electric motors are intended, for example in refrigerating units.

DE 101 13 559 A1 describes a device comprising a circuit board (2) with insulated output leads (3,3',4,4'), a metal, dish-shaped container (10) with an opening (21) for the leads, a seat (22) next to the opening, an insulating cable spout (25) at least partly inserted into the seat with an opening for injecting a setting sealant after positioning in the seat and a container cover (40). The spaces between the cover, container and spout are filled with setting sealant.

US 2003/000726 A1 describes a waterproof structure of an electric junction box comprising a case, a grommet having a flange which fits into a guide member of the case of the junction box and a cover. The flange includes at least two flange parts formed integrally with each other and the case is provided with first and second guide walls fitting with the first and second flange parts, respectively. Each top of the first and second flange parts projects higher than the guide member so that both tops adhere to the cover.

Object of the invention is to overcome the above drawbacks, and in particular to provide an electric motor with a casing completely of plastic material, which gives rise to a cable gland containing system that allows tests of protection against solids and liquids up to grade IP66 to be passed.

JP 11203972 discloses a casing accomodating a grommet.

Another object of the invention is to provide a system of assembling the body and cover of the motor casing which gives rise to a stable coupling state, with the possibility of compensating for play and errors in the shape of the coupling elements.

Yet another object of the invention is to provide such a casing for an electric motor that is simple and cheap to make and equally simple to assemble.

These objects are achieved, in accordance with the invention, with the characteristics listed in independent claim 1.

Advantageous embodiments of the invention are apparent from the dependent claims.

Essentially, the casing of the electric motor according to the invention, comprising a body and a cover, has, at the edge of the body, a substantially U-shaped recess, designed to accommodate the cable gland of the power cable of the motor, having a widening or base of the same shape as the recess, so as to couple perfectly therein, where it is blocked by the closing cover.

In particular, peripherally to the widening of the cable gland, a guide groove is provided which engages with the edge of the U-shaped recess formed in the body of the casing, retaining the cable against any traction forces exerted thereon.

At the bottom of said recess in the body of the casing is provided an external annular protrusion which covers the corresponding semi-circular part of the widening in the cable gland, whilst a wall protrudes downward from the cover to cover the remaining part of said widening, leaving, when it couples with the underlying protrusion of the body, a hole for the passage of the cable gland.

There is thus formed in the area of housing of the cable gland a "baffle" path which, besides exerting an excellent seal against liquids, makes it possible to bear the outward thrust that occurs during coupling between the body and the cover, which takes place on a conical surface of the cover, with interposition of an O-ring.

Further characteristics of the invention will be made clearer by the detailed description that follows, referring to a purely exemplifying and therefore non-limiting embodiment thereof, illustrated in the appended drawings, in which:
Figure 1 is an axonometric view of an electric motor with power cable according to the invention;
Figure 2 is an axonometric, exploded view of the electric motor of Figure 1, showing in particular the components of the casing and the power cable;
Figures 3a and 3b are two perspective views from different angles of the body of the casing of Figure 2;

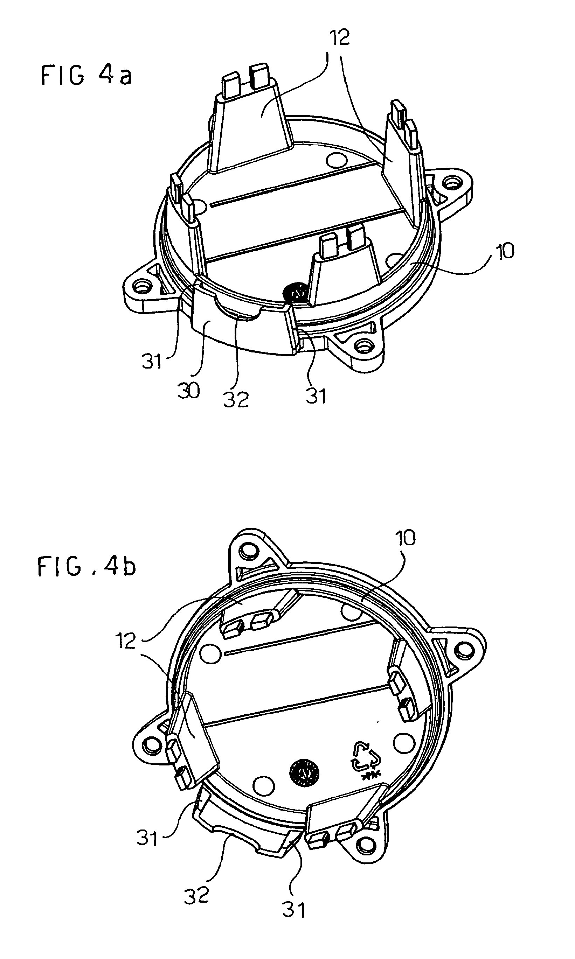

Figures 4a and 4b are two perspective views from different angles of the cover of the casing of Figure 2;
Figures 5a e 5b are two perspective views from different angles of the terminal part of the cable with cable gland shown in Figure 2;
Figure 6 is an enlarged partial section taken along the sectional plane VI-VI of Figure 1.

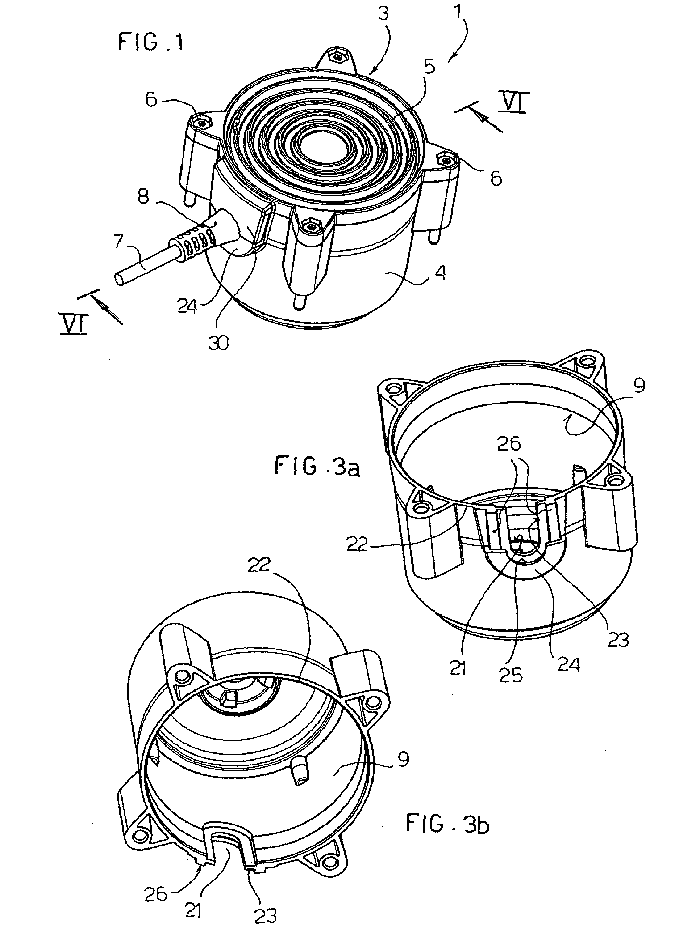

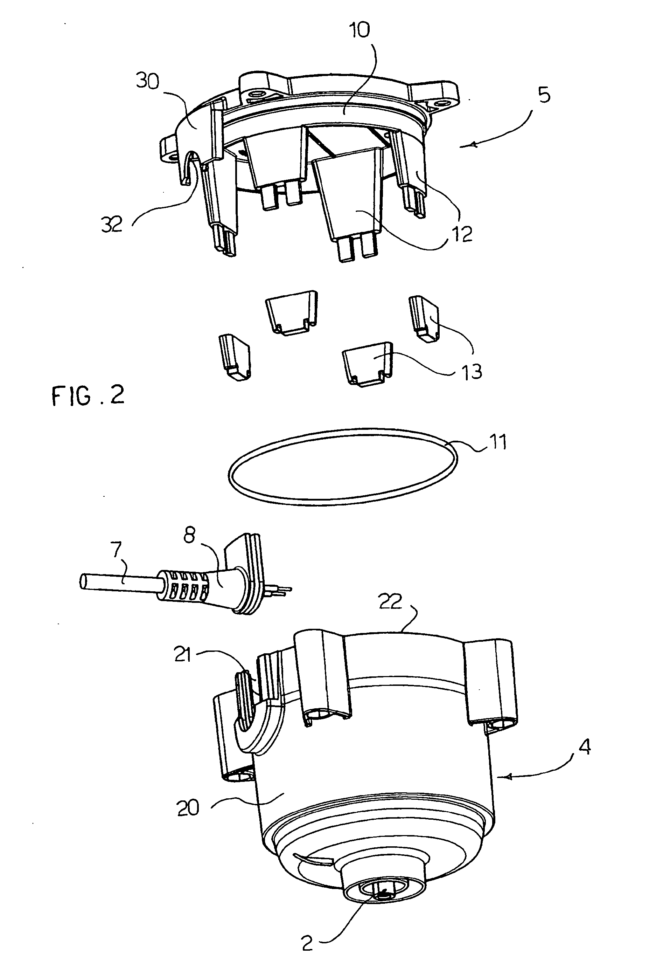

With reference to said figures, the electric motor according to the invention has been denoted as a whole with reference numeral 1 (Figure 1). In the exploded view of Figure 2 the axially disposed output shaft 2 of said electric motor can be seen.

The motor comprises an external casing 3, seen better in the exploded view of Figure 2, consisting of a body 4 and a cover 5.

The body 4 is designed to house the various components of the motor, such as the stator, rotor and electrical supply circuits, to be considered per se known and which will therefore not be further described. The cover 5, on the other hand, serves to close the body 4 and is fixed thereto by means of screws 6, as shown in Figure 1, after interposition between body and cover of an electrical power cable 7, which is housed in the manner that will be described in greater detail hereunder.

In the appended figures the cable 7 is shown with a cable gland 8 which is co-moulded therewith, but it is obvious that the cable gland 8 can be separate from the cable 7 and fitted thereon.

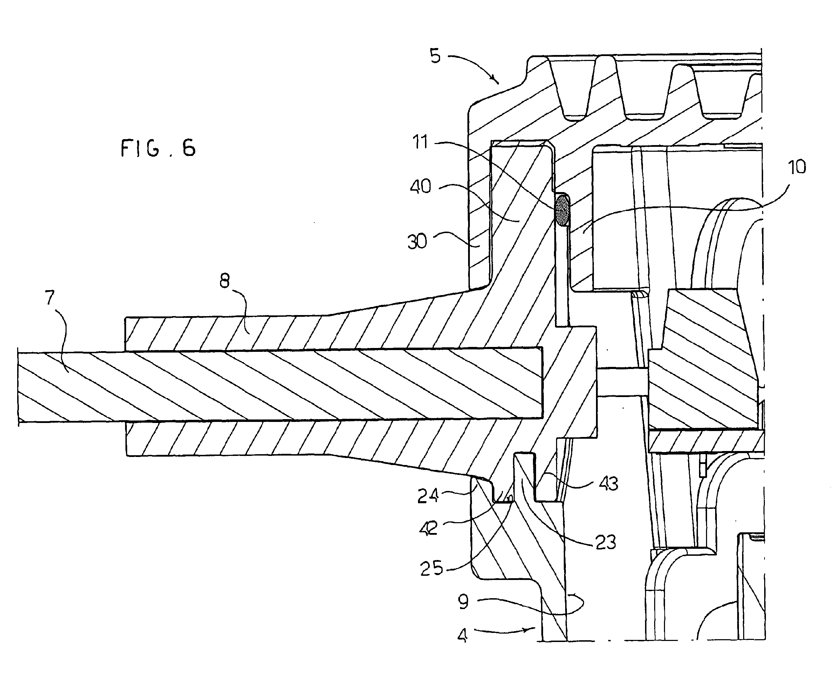

The body 4 of the casing 3 of the motor has a cylindrical inner side surface 9, whereas the cover 5 has a skirt 10 with a slightly conical outer profile (see in particular Figure 6), which is housed inside the body 4, causing coupling with a strong seal thanks to the interposition between the inner cylindrical surface 9 of the body 4 and the outer conical surface of the skirt 10 of an O-ring 11.

As can be seen in Figure 2, feet 12 protrude downward from the cover 5 and in particular from the skirt 10 thereof. At the free ends of said feet 12, which are four in number in the exemplifying embodiment, are applied respective rubber tips 13, which abut against the stator of the motor in the assembled state, causing closure of the cover, again in a pack, on the motor body, thanks to the elasticity of said rubber tips 13, which make it possible to compensate for any height tolerances.

Fixing of the cable 7 with the relative cable gland 8 to the casing 3 whose components, body 4 and cover 5, are advantageously both made of plastic material, will now be described.

In the side wall 20 of the body 4, at its free edge 22, a U-shaped recess 21 is formed. Said U-shaped recess is delimited by a peripheral edge 23, slightly protruding radially beyond the profile of the wall 20 (see Figure 6 in particular).

Furthermore, at the curved bottom of the U-shaped recess 21, there protrudes from the body a tongue 24, with a substantially semi-circular profile, and parallel to said edge 23, such as to form therewith a semi-circular groove 25, whilst respective ridges 26 which are joined to the bottom of said groove 25 are provided parallel to the straight sides of said edge 23.

From the edge of the cover 5, on the other hand, there protrudes downwards a wall with a curved profile 30, delimited by two side shoulders 31, which keep it slightly spaced from the edge of the cover, and having underneath a semi-circular cavity 32.

Thus, after coupling between the body 4 and the cover 5, the wall 30 creates a continuity with the semi-circular protrusion 24 (Figure 1), giving rise to a circular hole that closes on the cable gland 8.

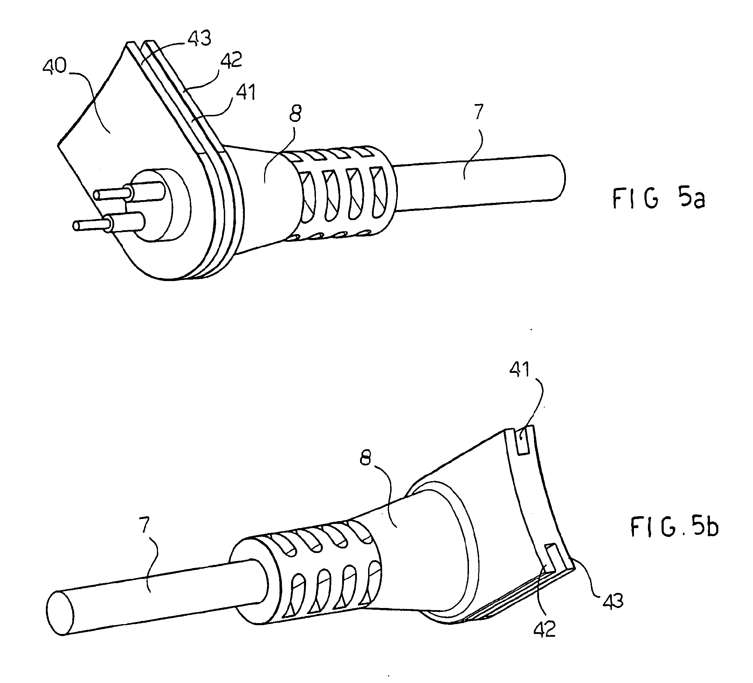

As can be seen in Figures 5a and 5b, the cable gland 8, co-moulded with the cable 7 - but which could also be a separate piece - has at its free end a widening or base 40 in the form of a slightly curved plate, with a U-shaped profile, which matches the profile of the U-shaped recess 21 formed in the body 4.

In particular, on the peripheral edge of the base 40 of the cable gland a guide groove 41 is provided which accommodates the edge 23 of the recess 21 after the cable gland has been inserted therein, as can be seen in particular in Figure 6.

In this condition, the lips 42, 43 defined by the groove 41 are disposed astride the edge 23. In particular, the outermost lip 43 with respect to the cable gland is disposed flush with or slightly recessed with respect to the inner surface 9 of the side wall of the body 4 whereas the innermost lip 42 lodges with its lower curved part in the semi-circular groove 25 and abuts with its straight side portions against the aforesaid ridges 26 of the body 4 which delimit externally the recess 21 formed therein.

When the cover 5 is applied to the body 4, the wall 30 protruding downwardly from the cover is disposed in front of the base 40 of the cable gland, whereas the side shoulders 31 clasp the ridges 26 provided at the sides of the recess 21.

As can be seen from the section of Figure 6, when the cover 5 is applied on the body 4, in the area housing the cable gland a sort of "baffle" path is formed, defined by the outer lip 43, the edge 23, the groove 25 (or the ridges 26) and the semi-circular protrusion 24 (or the wall 30), which confers an excellent seal both against liquids and mechanical.

It should be noted that the base 40 of the cable gland, before tightening of the cover-fixing screws 6, protrudes slightly from the upper edge 22 of the body 4, so that after tightening said base 40 is compressed in the cavity 21. The same happens for the rubber tips 13 placed at the ends of the feet 12, which abut against the stator assembly of the motor.

Again during tightening of the cover the O-ring 11 is compressed and forms a seal on the circumference of the cover.

It is important to note that the particular shape of the cable gland housing and fixing means allow an excellent seal against liquids, up to grade IP66, to be obtained, and excellent containment of the forces that are created during tightening of the cover 5 on the body 4, given the yielding nature of the materials that make up these elements.

In particular, forced coupling of the cover 5 with the O-ring 11 on the body 4 tends to cause a widening of the body 4 in the area of the recess 21, which is contrasted and contained by the side shoulders 31 of the wall 30 which protrudes from the cover.

The external thrust caused by the pressure of the O-ring 11 on the base 40 of the cable gland 8, on the other hand, is contained by said protruding wall 30 which is disposed in front of the base 40.

Lastly, the pressure exerted on the bottom of the recess 21 by the base 40 of the cable gland, which, amongst other things, would tend to make the curved bottom part of said base overhang, is contained by the semicircular protrusion 24 provided on the body 4.

From the foregoing description the advantages of the invention, which proposes a simple and cheap solution to achieve the stated objects, are apparent.

Of course the invention is not limited to the particular embodiment described previously and illustrated in the appended drawings, but numerous changes and modifications of detail within the reach of a person skilled in the art can be made thereto without thereby departing from the scope of the invention as set forth in the claims that follow.

## Claims

1. An electric motor comprising a casing (3) of plastic material consisting of a body (4) and a closing cover (5), designed to receive an electric power cable (7) with relative cable gland (8), a recess (21) being formed at the edge (22) of said body which is destined to house a widening or base (40) of said cable gland with a shape corresponding to said recess (21), said recess (21) having an edge (23) designed to accommodate a guide groove (41) provided peripherally to said base (40) of the cable gland, which remains locked in said recess (21) of the body (4) following application of the cover (5),
wherein
- at the bottom of said recess (21), on the outer side wall of the body (4) is formed a semi-circular protrusion (24) adapted to be disposed in front of the bottom part of said base (40) of the cable gland, said protrusion (24) defining with the bottom part of said edge (23) of the recess (21) a groove (25) designed to accommodate the bottom part of an inner lip (42) of said base (40) of the cable gland, defined by said groove (41); and in that
- said cover (5) has a wall (30) with a curved profile protruding downwardly from the peripheral edge thereof, destined to cover said base (40) of the cable gland frontally. wherein
- said wall (30) is delimited by respective side shoulders (31) which keep it slightly at a distance from the cover (5) and destined to clasp respective external projections (26) provided on the body (4);
- beneath said wall (30) is provided a semi-circular recess (32), giving rise with said semi-circular protrusion (24) provided on the body (4) to a housing hole for said cable gland (8); and
- said cover (5) has a skirt (10), downwardly protruding therefrom, with a slightly conical outer surface, which couples forcibly with the inner cylindrical surface (9) of said body (4) through interposition of an O-ring (11) wherein the O-Ring (11) is interposed between said skirt (10) and said base (40) of the cable gland (8)..

2. An electric motor according to claim 1, **characterised in that** said recess (21) of the body (4) and said base (40) of the cable gland (8) have a substantially U-shaped profile.

3. An electric motor according to the preceding claims, **characterised in that** said external projections (26) are provided at the two sides of said recess (21), on the wall (20) of the body (4) to contain the sides of said base (40) of the cable gland.

4. An electric motor according to any one of the preceding claims, **characterised in that** from said cover (5) there protrude downwardly feet (12), at the ends of which are applied respective rubber tips (13), destined to abut against the stator pack housed in the body (4) of the casing, to allow the cover (5) to be closed in a pack on the body (4).

5. A casing of plastic material for an electric motor according to any one of the preceding claims.

## Patentansprüche

1. Elektromotor, der ein aus einem Körper (4) und einem Verschlussdeckel (5) bestehendes Gehäuse (3) aus Kunststoffmaterial umfasst, das dazu ausgebildet ist, ein elektrisches Stromkabel (7) mit zugehöriger Kabelverschraubung (8) aufzunehmen, wobei eine Aussparung (21) am Rand (22) des Körpers ausgebildet ist, welche dazu bestimmt ist, eine Erweiterung oder einen Fuß (40) der Kabelverschraubung mit einer der Aussparung (21) entsprechenden Form (21) aufzunehmen, wobei die Aussparung (21) einen Rand (23) aufweist, der dazu ausgebildet ist, in eine Führungsnut (41) einzugreifen, die entlang des Umfangs des Fußes (40) der Kabelverschraubung vorgesehen ist, welcher nach Anbringung des Verschlussdeckels (5) in der Aussparung (21) des Körpers (4) verriegelt bleibt,
wobei
- am Boden der Aussparung (21) an der äußeren Seitenwand des Körpers (4) ein halbkreisförmiger Vorsprung (24) ausgebildet ist, der dazu eingerichtet ist, gegenüber dem unteren Teil des Fußes (40) der Kabelverschraubung angeordnet zu werden, wobei der Vorsprung (24) mit dem unteren Teil des Randes (23) der Aussparung (21) eine Nut (25) bildet, die dazu ausgebildet ist, den unteren Teil einer inneren Lippe (42) des Fußes (40) der Kabelverschraubung aufzunehmen, die durch die Führungsnut (41) definiert ist; und wobei
- der Verschlussdeckel (5) eine von seinem Umfangsrand nach unten vorstehende Wand (30) mit einem gekrümmten Profil aufweist, die dazu bestimmt ist, den Fuß (40) der Kabelverschraubung an der Vorderseite abzudecken, wobei
- die Wand (30) durch jeweilige seitliche Schultern (31) begrenzt wird, welche sie in einem geringfügigen Abstand von dem Verschlussdeckel (5) halten und dazu bestimmt sind, jeweilige äußere Ansätze (26), die an dem Körper (4) vorgesehen sind, zu umgreifen;
- unter der Wand (30) eine halbkreisförmige Aussparung (32) vorgesehen ist, welche mit dem halbkreisförmigen Vorsprung (24), der an dem Körper (4) vorgesehen ist, ein Aufnahmeloch für die Kabelverschraubung (8) bildet; und
- der Verschlussdeckel (5) eine von ihm nach unten vorstehende Schürze (10) mit einer leicht konischen Außenfläche aufweist, welche mit der zylindrischen Innenfläche (9) des Körpers (4) durch Anbringung eines O-Ringes (11) dazwischen zwangsgekoppelt ist, wobei der O-Ring (11) zwischen der Schürze (10) und dem Fuß (40) der Kabelverschraubung (8) angebracht ist.

2. Elektromotor nach Anspruch 1, **dadurch gekennzeichnet, dass** die Aussparung (21) des Körpers (4) und der Fuß (40) der Kabelverschraubung (8) ein im Wesentlichen U-förmiges Profil aufweisen.

3. Elektromotor nach den vorhergehenden Ansprüchen, **dadurch gekennzeichnet, dass** die äußeren Ansätze (26) beiderseits der Aussparung (21) an der Wand (20) des Körpers (4) vorgesehen sind, so dass sich die Seiten des Fußes (40) der Kabelverschraubung zwischen ihnen befinden.

4. Elektromotor nach einem der vorhergehenden Ansprüche, **dadurch gekennzeichnet, dass** von dem Verschlussdeckel (5) Füße (12) nach unten vorstehen, an deren Enden jeweilige Gummispitzen (13) angebracht sind, die dazu bestimmt sind, an dem Staturpaket anzuliegen, das in dem Körper (4) des Gehäuses aufgenommen ist, um zu ermöglichen, dass der Verschlussdeckel (5) in einem Paket auf dem Körper (4) geschlossen wird.

5. Gehäuse aus Kunststoffmaterial für einen Elektromotor nach einem der vorhergehenden Ansprüche.

## Revendications

1. Moteur électrique comprenant un boîtier (3) de matière plastique constitué d'un corps (4) et d'un couvercle de fermeture (5), conçu afin de recevoir un câble d'alimentation électrique (7) avec une entrée de câble (8) afférente, un évidement (21) étant formé au niveau du bord (22) dudit corps qui est destiné à renfermer un élargissement ou une base (40) de ladite entrée de câble avec une forme correspondant audit évidement (21), ledit évidement (21) comportant un bord (23) destiné à renfermer une rainure de guidage (41) prévue périphériquement à ladite base (40) de l'entrée de câble, qui reste verrouillée dans ledit évidement (21) du corps (4) suite à l'application du couvercle (5),
dans lequel
- au fond dudit évidement (21), sur la paroi de côté extérieur du corps (4) est formée une protubérance semi-circulaire (24) adaptée afin d'être disposée à l'avant de la partie de fond de ladite base (40) de l'entrée de câble, ladite protubérance' (24) définissant avec la partie de fond dudit bord (23) de l'évidement (21) une rainure (25) conçue afin de renfermer la partie de fond d'une lèvre intérieure (42) de ladite base (40) de l'entrée de câble, définie par ladite rainure (41) ; et en ce que
- ledit couvercle (5) comporte une paroi (30) avec un profil incurvé dépassant vers le bas à partir du bord périphérique de celui-ci, destiné à recouvrir ladite base (40) de l'entrée de câble frontalement, dans lequel
- ladite paroi (30) est délimitée par des épaulements latéraux respectifs (31) qui la gardent légèrement à une distance du couvercle, (5) et destinés à serrer des protubérances externes respectives (26) prévues sur le corps (4) ;
- en dessous de ladite paroi (30) est prévu un évidement semi-circulaire (32), donnant lieu avec ladite protubérance semi-circulaire (24) prévue sur le corps (4) à un orifice de logement destiné à ladite entrée de câble (8) ; et
- ledit couvercle (5) possède une jupe (10), dépassant vers le bas à partir de celui-ci, avec une surface extérieure légèrement conique, qui se couple par forçage à la surface cylindrique intérieure (9) dudit corps (4) via l'interposition d'un joint torique (11), dans lequel le joint torique (11) est interposé entre ladite jupe (10) et ladite base (40) de l'entrée de câble (8).

2. Moteur électrique selon la revendication 1, **caractérisé en ce que** ledit évidement (21) du corps (4) et ladite base (40) de l'entrée de câble (8) ont un profilé substantiellement en forme de U.

3. Moteur électrique selon les revendications précédentes, **caractérisé en ce que** lesdites protubérances externes (26) sont prévues des deux côtés de ladite cavité (21), sur la paroi (20) du corps (4) afin de contenir les côtés de ladite base (40) de l'entrée de câble.

4. Moteur électrique selon une quelconque des revendications précédentes, **caractérisé en ce que** des pieds (12) dépassent vers le bas à partir dudit couvercle (5), aux extrémités desquels sont appliquées des pointes de caoutchouc respectives (13), destinées à buter contre le paquet de tôles de stator logé dans le corps (4) du boîtier, afin de permettre au couvercle (5) d'être fermé en un paquet sur le corps (4).

5. Boîtier de matière plastique destiné à un moteur électrique selon une quelconque des revendications précédentes.
